# EUROPEAN PATENT SPECIFICATION

(11) **EP 3 169 168 B1**
(45) Date of publication and mention of the grant of the patent: **11.04.2018**
(21) Application number: 15739439.6
(22) Date of filing: 06.07.2015
(51) Int. Cl.: A23L 15/00

(54) **METHOD FOR TREATING FOOD SURFACES WITH AMINO ACID ESTERS**
VERFAHREN ZUR BEHANDLUNG VON LEBENSMITTELOBERFLÄCHEN MIT AMINOSÄUREESTERN
PROCÉDÉ DE TRAITEMENT DE SURFACES DE PRODUITS ALIMENTAIRES À L'AIDE D'ESTERS D'ACIDES AMINÉS

(30) Priority: 16.07.2014 US 201462025242 P
(43) Date of publication of application: 24.05.2017
(73) Proprietor: Dow Global Technologies LLC, Midland, MI 48674 (US)
(72) Inventor: CURTIS-FISK, Jaime L., Midland, MI 48667 (US); DEO, Puspendu, Midland, MI 48642 (US); HUGHES, Stephanie L., Midland, MI 48674 (US); RAJAN, Janardhanan S., Midland, MI 48674 (US); TOMLINSON, Ian A., Midland, MI 48674 (US)
(74) Representative: Houghton, Mark Phillip
(86) International application number: PCT/US2015/039176
(87) International publication number: WO 2016/010752

(56) References cited:
- EP-A1- 1 287 748
- WO-A1-2013/059064
- WO-A1-2013/059065
- US-A1- 2004 033 299

## Description

This invention relates to a method for treating food surfaces with amino acid esters to improve efficacy of the compounds.

U.S. Pub. No. 2004/0033299 discloses a food and beverage preservative for reducing microbial contamination, wherein said preservative includes a cellulose fiber and an antioxidant. Further, EP 1 287 748 discloses a liquid food having good shelf stability, wherein the food includes a starch, a thermoreversible gel forming hydrocolloid and a hydrocolloid based on a cellulose derivative. However, these references do not disclose a method for reducing contamination on a food surface, nor do they disclose the use of the methylcellulose or the acyl amino acid ester used in the present invention.

U.S. Pub. No. 2009/0246336 discloses a method for reducing bacterial contamination in food by applying a bacteriophage treatment, in some embodiments together with a thickener. However, this reference does not disclose or suggest use of the methylcellulose polymers of the present invention.

The problem addressed by this invention is to provide an improved method for treatment of food surfaces with amino acid esters.

### STATEMENT OF THE INVENTION

The present invention is directed to a method for reducing or inhibiting bacterial contamination on a food surface. The method comprises applying to the food surface an N-C₆-C₁₈ acyl amino acid ester and a methylcellulose, wherein
the methylcellulose has anhydroglucose units joined by 1-4 linkages wherein hydroxy groups of anhydroglucose units are substituted with methyl groups such that s23/s26 is 0.36 or less,
wherein s23 is the molar fraction of anhydroglucose units wherein only the two hydroxy groups in the 2- and 3-positions of the anhydroglucose unit are substituted with methyl groups and
wherein s26 is the molar fraction of anhydroglucose units wherein only the two hydroxy groups in the 2- and 6-positions of the anhydroglucose unit are substituted with methyl groups.

### DETAILED DESCRIPTION OF THE INVENTION

Percentages are weight percentages (wt%), temperatures are in °C and experiments were performed at room temperature (20-25°C), unless specified otherwise. A "food surface" is an outer surface of any food product. Food products include, e.g., meats, cheeses, fruits and vegetables. Meats are the flesh of animals intended for use as food. Animals include mammals (e.g., cows, pigs, sheep, buffalo), birds (e.g., chickens, turkeys, ducks, geese), fish and shellfish. Meats include processed meat products, e.g., sausage, cured meats, meat spreads, deli meats and ground meats. Preferred meats include beef and chicken. Especially preferred meats are fresh animal carcasses.

In beef production live animals are slaughtered, bled, their hides are removed and the carcasses are eviscerated. At this stage the carcasses are split in to two halves and treated to diminish microbial populations on their surface, which may be in the form of high temperature water washes and spraying with antimicrobial solutions. Throughout these stages the carcasses are warm (at 35 - 38°C), with their temperatures only a few degrees lower than their pre-slaughter body temperatures. These carcasses are now sent to a chiller where they will cool down to about 4-7°C over the next 14-24 hours. Treating the carcasses when they are still warm is an inherent part of this invention.

Poultry processing begins with hanging of live birds followed by stunning and bleeding. After bleeding, while still suspending from the line, the birds pass through a scald tank for brief periods (about 1-2 minutes) to facilitate the subsequent step of feather plucking. These steps keep the bird carcasses at temperatures in the range of 32 - 40°C. After evisceration, in multiple stages, the birds are chilled. The chilling process may be via a dip in cold chlorinated water or by air chilling in cold rooms. Treating the bird carcasses when they are still warm and prior to their entry into chillers is a part of this invention.

Preferably, carcasses treated according to the present invention are those having a temperature at least 30°C, preferably at least 32°C, preferably at least 34°C, preferably at least 35°C, preferably at least 36°C, preferably at least 37°C; preferably no greater than 44°C, preferably no greater than 42°C, preferably no greater than 40°C.

N-C₆-C₁₈ acyl amino acid esters suitable for use in the present invention are those effective in inhibiting growth of bacteria, including spoilage bacteria. Preferred compounds are effective against the following bacteria:
*Escherichia coli* including Shiga Toxin producing Escherichia coli (STEC) (also including strains of Verotoxin-producing *Escherichia coli* that have been linked with the severe complication hemolytic-uremic syndrome (HUS)); enterohemorrhagic *E. coli* (EHEC), shiga-like toxin-producing *E. coli* (STEC or SLTEC) (the specific seven serogroups of STEC include (O157:H7, O26, 0103, O45, 0111, 0121 and 0145) of enterohemorrhagic *E. coli* that have been declared adulterants in non-intact raw beef by US Federal Drug Authority), hemolytic uremic syndrome-associated enterohemorrhagic *E. coli* (HUSEC) and verocytotoxin- or verotoxin-producing *E. coli* (VTEC).
Other *Escherichia coli* strains that have been various referred to by other virulence properties, such as enteroinvasive (EIEC), enteropathogenic (EPEC), enterotoxigenic (ETEC), enteroaggregative (EAEC or EAgEC)
   *Salmonella* species, including, but not limited to *Salmonella enterica* strains with the following subspecies based on serotyping:
   Enteritidis, Kentucky, Typhimurium, Typhimurium Covariant V, Heidelberg, Hadar, Newport, Georgia, Agona, Grampian, Senftenberg , Alachua , Infantis , Reading, Schwarzengrund, Mbandaka, Montevideo, Berta and Thompson.
   *Campylobacter* species *(including Campylobacter jejuni)*
   *Clostridium perfringens*; *Clostridium botulinum*
   *Listeria species (including Listeria monocytogenes)*
   Shigella spp. (including serotypes A, B, C and D)
   Staphylococcus species inlcuding Staphylococcus aureus (including Methicillin resistant Staphylococcus and and including species causing Staphylococcal enteritis Streptococcus species
   Vibrio cholerae Vibrio species including Vibrios cholera (including serotypes O1 and non-O1, Vibrio parahaemolyticus, and Vibrio vulnificus
   Yersinia species Including Yersinia enterocolitica and Yersinia pseudotuberculosis

The N-C₆-C₁₈ acyl amino acid ester has a C₆-C₁₈ acyl group attached to the alpha-amino group of an amino acid to form an amido group. It is the molecule which could be produced from an amino acid by reaction of the alpha-amino group with a C₆-C₁₈ acyl halide and esterification of the amino acid carboxylic acid group with an alcohol, preferably a C₁-C₆ aliphatic alcohol. Preferably, the acyl group is a C₈-C₁₆ acyl group, preferably C₈-C₁₂ acyl, preferably C₁₂ acyl. Preferably, the ester alkyl group is a C₁-C₄ alkyl group, preferably methyl or ethyl, preferably ethyl. Preferably, the amino acid is a basic amino acid, i.e., one which has an additional nitrogen-containing functional group in addition to the alpha-amino group, e.g., a guanidino group, an amino group or an imidazole group. Preferably, the amino acid is arginine, lysine or histidine; preferably arginine. Preferably, the N-C₆-C₁₈ acyl amino acid ester is in the form of a hydrochloride salt. Preferably, the N-C₆-C₁₈ acyl amino acid ester is ethyl-N^{α}-lauroyl-L-arginate (CAS number 60372-77-2, as the HCl salt) (also known as lauric arginate).

Preferably, the N-C₆-C₁₈ acyl amino acid ester is applied to the food surface in a liquid carrier. Preferably, the liquid carrier is an aqueous medium. In one preferred embodiment, the aqueous medium is buffered, preferably to a pH from 4 to 9, preferably from 5 to 8.5, preferably from 6 to 8. The liquid carrier may also include other ingredients, e.g., surfactants, thickeners, stabilizers, solvents (preferably glycol solvents, e.g., propylene glycol, or glycerol). Preferably, when solvents are included they are present in an amount no greater than 10 wt%, preferably no greater than 7 wt%, preferably no greater than 4 wt%, preferably no greater than 3 wt%, preferably no greater than 2 wt%. The concentration of N-C₆-C₁₈ acyl amino acid ester in the liquid carrier varies depending on its activity. Preferably, the concentration is from 0.1 to 5 wt%, preferably at least 0.2 wt%, preferably at least 0.3 wt%; preferably no more than 3 wt%, preferably no more than 2 wt%.

The N-C₆-C₁₈ acyl amino acid ester and the methylcellulose may be applied to the food surface together in the same liquid carrier or separately in separate liquid carriers. Preferably, the N-C₆-C₁₈ acyl amino acid ester and the methylcellulose are applied to the food surface in the same liquid carrier. At the time of application to the food surface, preferably a liquid carrier is at a temperature from 4 to 30°C, preferably no greater than 28°C, preferably no greater than 26°C, preferably no greater than 24°C, preferably no greater than 22°C; preferably at least 6°C, preferably at least 8°C, preferably at least 10°C, preferably at least 12°C, preferably at least 14°C. Preferably, the liquid carrier is stored within the above limits. The manner in which the amino acid ester and methylcellulose are applied to the surface is not critical. Standard methods for applying liquids to a surface may be used, including, e.g., dripping, immersion, brushing and spraying; although spraying is preferred. Preferably, the liquid carrier containing amino acid ester and methylcellulose is applied to the food surface in an amount from 5 to 100 mg/cm², preferably 10 to 90 mg/cm², preferably 15 to 80 mg/cm².

Preferably, the concentration of the methylcellulose in the treatment solution is from 0.5 to 10 wt%, based on the total weight of the solution, preferably at least 0.7 wt%, preferably at least 0.9 wt%, preferably at least 1.1 wt%, preferably at least 1.3 wt%, preferably at least 1.5 wt%; preferably no more than 8 wt%, preferably no more than 6 wt%, preferably no more than 4 wt%.

In the present invention, a specific methylcellulose is an essential component in the method. The methylcellulose has anhydroglucose units joined by 1-4 linkages. Each anhydroglucose unit contains hydroxyl groups at the 2, 3, and 6 positions. Partial or complete substitution of these hydroxyls creates cellulose derivatives. For example, treatment of cellulosic fibers with caustic solution, followed by a methylating agent, yields cellulose ethers substituted with one or more methoxy groups. If not further substituted with other alkyls, this cellulose derivative is known as methylcellulose.

An essential feature of the specific methylcellulose used in the method of the present invention is the position of the methyl groups. The composition for delivery of the invention comprises a methylcellulose wherein hydroxy groups of anhydroglucose units are substituted with methyl groups such that s23/s26 is 0.36 or less, preferably 0.33 or less, more preferably 0.30 or less, most preferably 0.27 or less or 0.26 or less, and particularly 0.24 or less or 0.22 or less. Preferably s23/s26 is 0.08 or more, 0.10 or more, 0.12 or more, 0.14 or more, or 0.16 or more.

In the ratio s23/s26, s23 is the molar fraction of anhydroglucose units wherein only the two hydroxy groups in the 2- and 3-positions of the anhydroglucose unit are substituted with methyl groups and s26 is the molar fraction of anhydroglucose units wherein only the two hydroxy groups in the 2- and 6-positions of the anhydroglucose unit are substituted with methyl groups. For determining the s23, the term "the molar fraction of anhydroglucose units wherein only the two hydroxy groups in the 2- and 3-positions of the anhydroglucose unit are substituted with methyl groups" means that the two hydroxy groups in the 2- and 3-positions are substituted with methyl groups and the 6-positions are unsubstituted hydroxy groups. For determining the s26, the term "the molar fraction of anhydroglucose units wherein only the two hydroxy groups in the 2- and 6-positions of the anhydroglucose unit are substituted with methyl groups" means that the two hydroxy groups in the 2- and 6-positions are substituted with methyl groups and the 3-positions are unsubstituted hydroxy groups.

Formula I below illustrates the numbering of the hydroxy groups in anhydroglucose units.

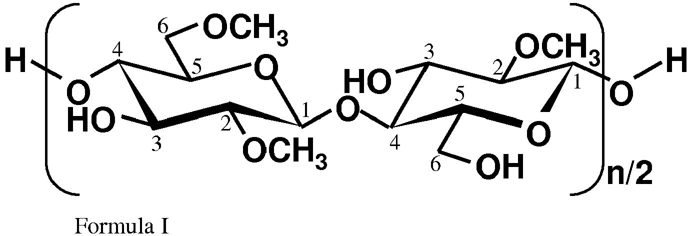

In one preferred embodiment of the invention hydroxy groups of anhydroglucose units are substituted with methyl groups such that the s23/s26 of the methylcellulose is 0.27 or less, preferably 0.26 or less, more preferably 0.24 or less or even 0.22 or less. In this embodiment of the invention s23/s26 of the methylcellulose preferably is 0.08 or more, 0.10 or more, 0.12 or more, 0.14 or more, 0.16 or more, or 0.18 or more. Methods of making methylcelluloses of this embodiment are described in more detail in the Examples. A general procedure of making methylcelluloses of this embodiment is described in International Patent Applications WO 2013/059064, pages 11 - 12 and WO 2013/059065, pages 11 - 12.

In another preferred embodiment of the invention hydroxy groups of anhydroglucose units are substituted with methyl groups such that the s23/s26 of the methylcellulose is more than 0.27 and up to 0.36, preferably more than 0.27 and up to 0.33, and most preferably more than 0.27 and up to 0.30. Methylcelluloses wherein hydroxy groups of anhydroglucose units are substituted with methyl groups such that s23/s26 is about 0.29 are commercially available under the trade name METHOCEL SG or SGA (The Dow Chemical Company). They gel at a relatively low temperature, at 38 °C to 44 °C at a concentration of 2 wt. % in water. US Patent No. 6,235,893 teaches the preparation of methylcelluloses of which 1.5 wt. % solutions in water exhibit onset gelation temperatures of 31 - 54 °C, most of them exhibiting gelation temperatures of 35 - 45 °C.

The methylcellulose preferably has a DS(methyl) of from 1.55 to 2.25, more preferably from 1.65 to 2.20, and most preferably from 1.70 to 2.10. The degree of the methyl substitution, DS(methyl), also designated as DS(methoxyl), of a methylcellulose is the average number of OH groups substituted with methyl groups per anhydroglucose unit.

The determination of the % methoxyl in methylcellulose is carried out according to the United States Pharmacopeia (USP 34). The values obtained are % methoxyl. These are subsequently converted into degree of substitution (DS) for methyl substituents. Residual amounts of salt have been taken into account in the conversion.

The viscosity of the methylcellulose is generally at least 2.4 mPa•s, preferably at least 3 mPa•s, and most preferably at least 10 mPa•s, when measured as a 2 wt. % aqueous solution at 5 °C at a shear rate of 10 s⁻¹. The viscosity of the methylcellulose is preferably up to 10,000 mPa•s, more preferably up to 5000 mPa•s, and most preferably up to 2000 mPa•s, when measured as indicated above.

### EXAMPLES

### Production of Methylcellulose MC-1 to MC-4

Methylcelluloses MC-1 to MC-4 were produced according to the following procedure. Finely ground wood cellulose pulp was loaded into a jacketed, agitated reactor. The reactor was evacuated and purged with nitrogen to remove oxygen, and then evacuated again. The reaction is carried out in two stages. In the first stage, a 50 weight percent aqueous solution of sodium hydroxide was sprayed onto the cellulose until the level reached 1.8 mol of sodium hydroxide per mol of anhydroglucose units of the cellulose, and then the temperature was adjusted to 40 °C. After stirring the mixture of aqueous sodium hydroxide solution and cellulose for about 20 minutes at 40 °C, 1.5 mol of dimethyl ether and 2.3 mol of methyl chloride per mol of anhydroglucose units were added to the reactor. The contents of the reactor were then heated in 60 min to 80 °C. After having reached 80 °C, the first stage reaction was allowed to proceed for 5 min. Then the reaction was cooled down to 65 °C in 20 min.

The second stage of the reaction was started by addition of methyl chloride in an amount of 3.4 molar equivalents of methyl chloride per mol of anhydroglucose unit. The addition time for methyl chloride was 20 min. Then a 50 weight percent aqueous solution of sodium hydroxide at an amount of 2.9 mol of sodium hydroxide per mol of anhydroglucose units was added over a time period of 45 min. The rate of addition was 0.064 mol of sodium hydroxide per mol of anhydroglucose units per minute. After the second-stage addition was completed the contents of the reactor were heated up to 80 °C in 20 min and then kept at a temperature of 80 °C for 120 min.

After the reaction, the reactor was vented and cooled down to about 50 °C. The contents of the reactor were removed and transferred to a tank containing hot water. The crude methylcellulose was then neutralized with formic acid and washed chloride free with hot water (assessed by AgNO₃ flocculation test), cooled to room temperature and dried at 55 °C in an air-swept drier, and subsequently ground.

The methylcellulose had a DS(methyl) of 1.88 (30.9 wt.% methoxyl), a mol fraction (26-Me) of 0.3276 ± 0.0039, a mol fraction (23-Me) of 0.0642 ± 0.0060, an s23/s26 of 0.20 ± 0.02, and a steady-shear-flow viscosity η(5 °C, 10 s⁻¹, 2 wt.% MC) of 5500 mPa•s. The properties of the methylcellulose were measured as described below.

Samples of the produced methylcellulose were partially depolymerized by a known procedure to obtain the methylcelluloses MC-1 to MC-4. Generally speaking, the ground samples are treated with gaseous hydrogen chloride at a temperature of about 85 °C. About 1.5 g gaseous hydrogen chloride per kg of methylcellulose is used. The reaction period is adapted to the desired viscosity. Partial depolymerization of cellulose ethers using gaseous hydrogen chloride is generally known from European patent application EP 1 141 029 and the prior art cited therein. The partial depolymerization does not impact the DS(methyl) or the s23/s26. The properties of the methylcelluloses MC-1 to MC-4 were measured as described below.

### Determination of s23/s26 of Methylcellulose

The approach to measure the ether substituents in methylcellulose is generally known. See for example the approach described in principle for Ethyl Hydroxyethyl Cellulose in Carbohydrate Research, 176 (1988) 137-144, Elsevier Science Publishers B.V., Amsterdam,

DISTRIBUTION OF SUBSTITUENTS IN O-ETHYL-O-(2-HYDROXYETHYL)CELLULOSE by Bengt Lindberg, Ulf Lindquist, and Olle Stenberg.

Specifically, determination of s23/s26 was conducted as follows:
10-12 mg of the methylcellulose were dissolved in 4.0 mL of dry analytical-grade dimethyl sulfoxide (DMSO) (Merck, Darmstadt, Germany, stored over 0.3nm molecular sieve beads) at about 90 °C with stirring and then cooled to room temperature. The solution was stirred at room temperature over night to ensure complete solubilization/dissolution. The entire perethylation including the solubilization of the methylcellulose was performed using a dry nitrogen atmosphere in a 4 mL screw cap vial. After solubilization, the dissolved methylcellulose was transferred to a 22-mL screw-cap vial to begin the perethylation process. Powdered sodium hydroxide (freshly pestled, analytical grade, Merck, Darmstadt, Germany) and ethyl iodide (for synthesis, stabilized with silver, Merck-Schuchardt, Hohenbrunn, Germany) were introduced in a thirty-fold molar excess relative to the level of anhydroglucose units in the methylcellulose, and the mixture was vigorously stirred under nitrogen in the dark for three days at ambient temperature. The perethylation was repeated with addition of the threefold amount of the reagents sodium hydroxide and ethyl iodide compared to the first reagent addition, and stirring at room temperature was continued for an additional two days. Optionally, the reaction mixture could be diluted with up to 1.5 mL DMSO to ensure good mixing during the course of the reaction. Next, five mL of 5 % aqueous sodium thiosulfate solution was poured into the reaction mixture, and the mixture was then extracted three times with 4 mL of dichloromethane. The combined extracts were washed three times with 2 mL of water. The organic phase was dried with anhydrous sodium sulfate (about 1g). After filtration, the solvent was removed with a gentle stream of nitrogen, and the sample was stored at 4 °C until needed.

Hydrolysis of about 5 mg of the perethylated samples was performed under nitrogen in a 2-mL screw-cap vial with 1 mL of 90 % aqueous formic acid under stirring at 100 °C for 1 hour. The acid was removed in a stream of nitrogen at 35-40 °C and the hydrolysis was repeated with 1 mL of 2M aqueous trifluoroacetic acid for 3 hours at 120 °C in an inert nitrogen atmosphere with stirring. After completion, the acid was removed to dryness in a stream of nitrogen at ambient temperature using ca. 1 mL of toluene for co-distillation.

The residues of the hydrolysis were reduced with 0.5 mL of 0.5-M sodium borodeuteride in 2N aqueous ammonia solution (freshly prepared) for 3 hours at room temperature with stirring. The excess reagent was destroyed by dropwise addition of about 200 µL of concentrated acetic acid. The resulting solution is evaporated to dryness in a stream of nitrogen at about 35-40 °C and subsequently dried in vacuum for 15 min at room temperature. The viscous residue was dissolved in 0.5 mL of 15 % acetic acid in methanol and evaporated to dryness at room temperature. This was done five times and repeated four additional times with pure methanol. After the final evaporation, the sample was dried in vacuum overnight at room temperature.

The residue of the reduction was acetylated with 600 µL of acetic anhydride and 150 µL of pyridine for 3 hrs at 90 °C. After cooling, the sample vial was filled with toluene and evaporated to dryness in a stream of nitrogen at room temperature. The residue was dissolved in 4 mL of dichloromethane and poured into 2 mL of water and extracted with 2 mL of dichloromethane. The extraction was repeated three times. The combined extracts were washed three times with 4 mL of water and dried with anhydrous sodium sulfate. The dried dichloromethane extract was subsequently submitted to GC analysis. Depending on the sensitivity of the GC system, a further dilution of the extract could be necessary.

Gas-liquid (GLC) chromatographic analyses were performed with Agilent 6890N type of gas chromatographs (Agilent Technologies GmbH, 71034 Boeblingen, Germany) equipped with Agilent J&W capillary columns (30 m, 0.25-mm ID, 0.25-µm phase layer thickness) operated with 1.5-bar helium carrier gas. The gas chromatograph was programmed with a temperature profile that held constant at 60 °C for 1 min, heated up at a rate of 20 °C / min to 200 °C, heated further up with a rate of 4 °C / min to 250 °C, and heated further up with a rate of 20 °C / min to 310 °C where it was held constant for another 10 min. The injector temperature was set to 280 °C and the temperature of the flame ionization detector (FID) was set to 300 °C. Exactly 1µL of each sample was injected in the splitless mode at 0.5-min valve time. Data were acquired and processed with a LabSystems Atlas work station.

Quantitative monomer composition data were obtained from the peak areas measured by GLC with FID detection. Molar responses of the monomers were calculated in line with the effective carbon number (ECN) concept but modified as described in the table below. The effective carbon number (ECN) concept has been described by Ackman (R.G. Ackman, J. Gas Chromatogr., 2 (1964) 173-179 and R.F. Addison, R.G. Ackman, J. Gas Chromatogr., 6 (1968) 135-138) and applied to the quantitative analysis of partially alkylated alditol acetates by Sweet et. al (D.P. Sweet, R.H. Shapiro, P. Albersheim, Carbohyd. Res., 40 (1975) 217-225).

**Table 1. ECN increments used for ECN calculations:**

| Type of carbon atom | ECN increment |
|---|---|
| hydrocarbon | 100 |
| primary alcohol | 55 |
| secondary alcohol | 45 |

In order to correct for the different molar responses of the monomers, the peak areas were multiplied by molar response factors MRFmonomer which are defined as the response relative to the 2,3,6-Me monomer. The 2,3,6-Me monomer were chosen as reference since it was present in all samples analyzed in the determination of s23 / s26.
MRFmonomer = ECN2,3,6-Me / ECNmonomer

The mol fractions of the monomers were calculated by dividing the corrected peak areas by the total corrected peak area according to the following formulas:
(1) s23 is the sum of the molar fractions of anhydroglucose units which meet the following condition [the two hydroxy groups in the 2- and 3-positions of the anhydroglucose unit are substituted with methyl groups, and the 6-position is not substituted (= 23-Me)]; and
(2) s26 is the sum of the molar fractions of anhydroglucose units which meet the following condition [the two hydroxy groups in the 2- and 6-positions of the anhydroglucose unit are substituted with methyl groups, and the 3-position is not substituted (= 26-Me)].

### Determination of the DS(methyl) a methylcellulose

The determination of the % methoxyl in methylcellulose was carried out according to the United States Pharmacopeia (USP34). The values obtained were % methoxyl. These were subsequently converted into degree of substitution (DS) for methyl substituents. Residual amounts of salt were taken into account in the conversion.

### Solution Preparation

Concentrated polymer solutions were prepared by adding dry cellulose ether powder to water which had an initial temperature of 25 °C while stirring to achieve a good dispersion. The mixture of the MC and water was cooled to 2 °C within 20 minutes while stirring. After the polymer solution reached the temperature of 2 °C, solution preparation was completed by high shear mixing using an immersion mixer for two minutes. Formulations were prepared by mixing the antimicrobial active with a stock solution of fully hydrated cellulose ether polymer and diluting with water to achieve the desired concentrations.

### Evaluation of Thermal Gelation

Rheology measurements of aqueous solutions comprising a cellulose ether with and without antimicrobial actives were conducted with an Ares RFS3 rheometer (TA-Instruments) with cup and bob fixtures. Seventeen milliliters of solution were transferred to the cup fixture and the gap set to 5 mm. The sample was heated at a rate of 1°C per minute over a temperature range from 10 to 50 °C with a constant strain of 2% and a constant angular frequency of 5 radians per second. The viscosity at 20°C and 37°C are presented to indicate the increase in viscosity when exposed to a warm surface. The cross over point of G' and G" is defined as the temperature at which the curves intersect.

### Efficacy Testing

Model substrates tested include chicken skin and slices of beef. Substrates were mounted on an aluminum pan and incubated in sealed container at 37C, only removing from the incubator to apply solutions. An area of approximately 10 cm² was inoculated with 1 mL of *E. coli* ATCC 11303 culture, from a stock culture grown overnight in Difco media to about 1 x 10⁸ CFU per ml.. The culture was allowed to incubate on the surface for 30 minutes, any excess was then allowed to drip from the surface while the sample was held vertical prior to the same area beingsprayed with 600 microliters of formulation. In each example one sample is included that was inoculated with bacteria but no formulation applied, labeled as the control. During spray application and during the following incubation the sample was held vertical to allow dripping of non-gelled solution. Two hours after application of the formulation samples were removed using a 5 mm biopsy punch. Samples were vortexed in 1 mL of peptone buffered water to retrieve bacteria, followed by serial dilution and plating on eosin methylene blue (EMB) agar plates for quantification of surviving bacteria. Results are reported in log CFU per cm². All trials included a control sample that inoculated with bacteria but no antimicrobial solutions were applied. All formulations containing antimicrobial and polymer were compared to the sample containing antimicrobial with no polymer to evaluate the significance of the gelling polymer in efficacy. Data sets were compared using the Tukey Kramer method for comparing means, and all references to significance are regarding a statistical significance with a p value lower than 0.05.

### Materials

The following Polymers were utilized in the examples. The steady-shear-flow viscosity h(5 °C, 10 s⁻¹, 2 wt.% MC) of an aqueous 2-wt.% methylcellulose solution was measured at 5 °C at a shear rate of 10 s⁻¹ with an Anton Paar Physica MCR 501 rheometer and cup and bob fixtures.

**Table 1. Polymer Properties**

| Polymer | Substitution | S23/s26 | Viscosity, 2 wt.% in water at 5 °C |
|---|---|---|---|
| MC-1 | Methylcellulose | 0.20 | 6 |
| MC-2 | Methylcellulose | 0.20 | 7 |
| MC-3 | Methylcellulose | 0.20 | 57 |
| MC-4 | Methylcellulose | 0.20 | 742 |
| Methocel E3 | Hydroxypropyl Methylcellulose | N/A | 3 |

1. Cetyl Pyridinium Chloride (CPC) on Chicken Skin: Solutions containing MC-1 with CPC and propylene glycol (PG) exhibit gelation within the desired range with the control sample containing a convention polymer of equivalent molecular weight (Methocel E3) does not. The gelling solution results in a significantly greater reduction in bacteria than the solution containing the non-gelling polymer.

**Table 3. CPC on Chicken Skin Efficacy and Gelation Properties**

| | Control | 1% CPC, 1.5% PG | 1 % CPC, 1.5% PG, 5% MC-1 |
|---|---|---|---|
| Average log CFU per cm² | 6.6 | 5.4 | 3.6 |
| Standard Dev. log CFU per cm² | 0.03 | 0.1 | 0.4 |
| Viscosity at 20°C (cP) | N/A | N/A | 40 |
| Viscosity at 37°C (cP) | N/A | N/A | 2080¹ |

| | | | |
|---|---|---|---|
| 1. Material gelled - not an accurate viscosity reading, but indicates gelation | | | |

**Table 4. Efficacy Testing Results of CPC on Chicken Skin**

| | Control (log CFU) | 1 % CPC, 1.5% PG (log CFU) | 1 % CPC, 1.5% PG + 5% MC-1 (log CFU) |
|---|---|---|---|
| Sample 1 | 6.6 | 5.5 | 3.3 |
| Sample 2 | 6.6 | 5.3 | 4.0 |
| Sample 3 | 6.7 | 5.4 | 3.5 |

2. Lactic acid on chicken skin demonstrating medium and high viscosity polymers: Solutions containing medium viscosity (MC-2) and high viscosity (MC-3) polymers demonstrate gelation in the desired range while conventional polymers of equivalent viscosity do not. Both the solution containing 2% lactic acid with either 2% MC-2 or 1% MC-3 demonstrated a significantly greater reduction in bacteria than the sample containing 2% lactic acid with no polymer.

**Table 5. Lactic Acid on Chicken Skin Efficacy and Gelation Properties**

| | control | Lactic acid 2% | Lactic acid 2% + 2% MC-2 | Lactic acid 2% + 1 % MC-3 | Lactic acid 2% + 1 % MC-2 |
|---|---|---|---|---|---|
| Average log CFU per cm² | 5.7 | 4.0 | 1.8 | 2.1 | N/M |
| Standard Dev. Log CFU per cm² | 0.5 | 0.4 | | 0.6 | N/M |
| Viscosity at 20°C (cP) | N/A | N/A | 3350 | 150 | 50 |
| Viscosity at 37°C (cP) | N/A | N/A | 29990¹ | 1360¹ | 1100¹ |

| | | | | | |
|---|---|---|---|---|---|
| 1. Material gelled - not an accurate viscosity reading, but indicates gelation | | | | | |

**Table 6. Efficacy Testing of Lactic Acid on Chicken Skin**

| | control | Lactic acid 2% (log CFU) | Lactic acid 2% + 2% MC-2 (log CFU) | Lactic acid 2% + 1% MC-3 (log CFU) |
|---|---|---|---|---|
| Sample 1 | 5.2 | 3.5 | 1.8 | 2.8 |
| Sample 2 | 6.2 | 4.2 | 1.8 | 1.8 |
| Sample 3 | 5.8 | 4.2 | 1.8 | 1.8 |

3. Lactic acid on chicken demonstrating polymer concentration comparison: The effect of polymer concentration on gelation temperature and efficacy was demonstrated using the low viscosity polymer MC-1. A solution containing 1% polymer exhibits gelation above the target temperature of 37C and does not result in increased efficacy. The solutions containing 2% lactic acid with 3% MC-1, 5% MC-1, or 8% MC-1 all resulted in significantly greater reduction in bacteria when compared to the solution of 2% lactic acid with no polymer.

**Table 7. Effect of Polymer Concentration on Efficacy and Gelation Properties**

| | control | 2% Lactic acid | 2% Lactic acid 1% MC-1 | 2% Lactic acid 3% MC-1 | 2% Lactic acid 5% MC-1 | 2% Lactic acid 8% MC-1 | 2% Lactic acid 8% Methocel E3 |
|---|---|---|---|---|---|---|---|
| Average CFU Log per cm² | 4.5 | 4.0 | 4.0 | 3.2 | 3.2 | 1.8 | N/M |
| Standard Dev. Log CFU per cm² | 0.1 | 0.1 | 0.1 | 0.2 | 0.2 | 1.6 | N/M |
| Viscosity at 20°C (cP) | N/A | N/A | 3 | 10 | 40 | 2090 | 40 |
| Viscosity at 37°C (cP) | N/A | N/A | 6 | 2440¹ | 56700¹ | 523910¹ | 30 |

| | | | | | | | |
|---|---|---|---|---|---|---|---|
| 1. Material gelled - not an accurate viscosity reading, but indicates gelation | | | | | | | |

**Table 8. Efficacy Testing Results of Effect of Polymer Concentration**

| | Control (log CFU) | 2% Lactic acid (log CFU) | 2% Lactic acid 1% MC-1 (log CFU) | 2% Lactic acid 3% MC-1 (log CFU) | 2% Lactic acid 5% MC-1 (log CFU) | 2% Lactic acid 8% MC-1 (log CFU) |
|---|---|---|---|---|---|---|
| Sample 1 | 4.6 | 3.9 | 4.0 | 3.2 | 2.9 | 2.3 |
| Sample 2 | 4.4 | 4.1 | 3.9 | 3.4 | 3.2 | 3.1 |
| Sample 3 | 4.5 | 3.9 | 4.0 | 3.0 | 3.3 | 0 |

4. Lactic acid solution on chicken skin demonstrating gelling vs. non-gelling polymers: The advantage of a gelling polymer solution compared to a non-gelling was evaluated comparing MC-1 to an equivalent viscosity grade conventional polymer. The gelling polymer exhibited gelation prior to 37°C and resulted in greater bacterial reduction than the conventional, which did not gel at the desired temperature. The gelling solution containing 2% lactic acid and 5% MC-1 resulted in a significantly greater reduction in bacteria than the 2% lactic acid solution with no polymer.

**Table 9. Gelling vs. Non-gelling Formulation Efficacy and Gelation Properties**

| | control | 2% Lactic acid | 2% Lactic acid + 5% MC-1 | 2% Lactic acid 5% + Methocel E3 |
|---|---|---|---|---|
| Average Log CFU per cm² | 4.5 | 4.0 | 3.2 | 4.5 |
| Standard Dev. Log CFU per cm² | 0.1 | 0.1 | 0.2 | 0.2 |
| Viscosity at 20°C (cP) | N/A | N/A | 44 | 13 |
| Viscosity at 37°C (cP) | N/A | N/A | 57000¹ | 4 |

| | | | | |
|---|---|---|---|---|
| 1. Material gelled - not an accurate viscosity reading, but indicates gelation | | | | |

**Table 10. Efficacy Testing Results of Gelling vs. Non-gelling Formulations**

| | Control (log CFU) | 2% Lactic acid (log CFU) | 2% Lactic acid + 5% MC-1 (log CFU) | 2% Lactic acid + 5% Methocel E3 (log CFU) |
|---|---|---|---|---|
| Sample 1 | 4.6 | 3.9 | 2.9 | 4.7 |
| Sample 2 | 4.4 | 4.1 | 3.2 | 4.6 |
| Sample 3 | 4.5 | 3.9 | 3.3 | 4.3 |

5. Lauric Arginate on chicken skin: Increased efficacy of a solution containing a gelling polymer was demonstrated. The reduction in bacteria was significantly greater for the solution containing 0.5% lauric arginate with 5% MC-1 when compared to that containing only 0.5% lauric arginate with no polymer.

**Table 11. Lauric Arginate on Chicken Skin Efficacy and Gelation Properties**

| | Control | 0.5% LEA | 0.5% LEA + 5% MC-1 |
|---|---|---|---|
| Average Log CFU per cm² | 4.9 | 4.8 | 3.6 |
| Standard Dev. Log CFU per cm² | 0.3 | 0.5 | 0.5 |
| Viscosity at 20°C (cP) | N/A | N/A | 60 |
| Viscosity at 37°C (cP) | N/A | N/A | 1920¹ |

| | | | |
|---|---|---|---|
| 1. Material gelled - not an accurate viscosity reading, but indicates gelation | | | |

**Table 12. Efficacy Testing Results of Lauric Arginate on Chicken Skin**

| | Control (log CFU) | 0.5% LEA (log CFU) | 0.5% LEA + 5% MC-1 (log CFU) |
|---|---|---|---|
| Sample 1 | 4.7 | 5.2 | 3.2 |
| Sample 2 | 5.1 | 4.8 | 3.4 |
| Sample 3 | 5.1 | 4.3 | 4.1 |

6. Lactic Acid on Beef: The advantage of a gelling polymer was demonstrated using beef as a substrate. The gelling solution containing 2% lactic acid and 8% MC-1 resulted in significantly greater reduction than the solution containing 2% lactic acid with no polymer.

**7. Table 13. Lactic Acid on Beef Efficacy and Gelation Properties**

| | Bacteria (log CFU) | 2% Lactic acid (log CFU) | 2% Lactic acid 8% MC-1 (log CFU) |
|---|---|---|---|
| Average CFU per cm² | 6.2 | 5.8 | 4.2 |
| Standard Dev. CFU per cm² | 0.1 | 0.2 | 0.4 |
| Viscosity at 20°C (cP) | N/A | N/A | 2090 |
| Viscosity at 37°C (cP) | N/A | N/A | 523910¹ |

| | | | |
|---|---|---|---|
| 1. Material gelled - not an accurate viscosity reading, but indicates gelation | | | |

**Table 14. Efficacy Testing Results of Lactic Acid on Beef**

| | Bacteria (log CFU) | 2% Lactic acid (log CFU) | 2% Lactic acid 8% MC-1 (log CFU) |
|---|---|---|---|
| Sample 1 | 6.2 | 6.1 | 4.5 |
| Sample 2 | 6.1 | 5.7 | 3.8 |
| Sample 3 | 6.2 | 5.7 | 4.4 |

8. Gelling Peptide Formulations: Solutions containing nisin and gelling polymer exhibited gelation within the desired temperature range. Gelled solutions will increase residence time on a food surface and increase efficacy.

**Table 15. Gelation Properties of Nisin Formulations**

| Sample | Viscosity at 20°C (cP) | Viscosity at 37°C (cP) |
|---|---|---|
| 3% MC-1, 100 ppm nisn | 30 | 240¹ |
| 1 % MC-4, 100 ppm nisin | 330 | 6620¹ |
| 1 % MC-3, 100 ppm nisin | 130 | 1550¹ |

| | | |
|---|---|---|
| 1. Material gelled - not an accurate viscosity reading, but indicates gelation | | |

9. Control of Gelation
CPC/propylene glycol increase the gelation temperature of the 3% MC-1 solution by 8 degrees. An equivalent solution prepared in phosphate buffered saline returns the gelation temperature to 30°C, and in a 2% solution of sodium chloride is depressed even lower to 28°C. Addition of a gelation temperature additive such as a salt or buffer, or increased polymer concentration, can be used to offset the addition of a gel temp increasing active ingredient.

**Table 16. Formulation Approaches to Controlling Gelation**

| Sample | G'/G" Crossover (°C) | Viscosity at 20°C (cP) | Viscosity at 37°C (cP) |
|---|---|---|---|
| 3% MC-1 | 30 | 8 | 110¹ |
| 3% MC-1, 1% CPC, 1.5% PG | 38 | 15 | 37 |
| 3% MC-1, 1% CPC, 1.5% PG, phosphate buffered saline | 32 | 15 | 1650¹ |
| 3 % MC-1, 1 % CPC, 1.5% PG, 2% NaCl | 27 | 20 | 3490¹ |
| 5 % MC-1 | 27 | 60 | 42460¹ |

| | | | |
|---|---|---|---|
| 1. Material gelled - not an accurate viscosity reading, but indicates gelation | | | |

## Claims

1. A method for reducing or inhibiting bacterial contamination on a food surface; said method comprising applying to the food surface an N-C₆-C₁₈ acyl amino acid ester and a methylcellulose, wherein
the methylcellulose has anhydroglucose units joined by 1-4 linkages wherein hydroxy groups of anhydroglucose units are substituted with methyl groups such that s23/s26 is 0.36 or less,
wherein s23 is the molar fraction of anhydroglucose units wherein only the two hydroxy groups in the 2- and 3-positions of the anhydroglucose unit are substituted with methyl groups and
wherein s26 is the molar fraction of anhydroglucose units wherein only the two hydroxy groups in the 2- and 6-positions of the anhydroglucose unit are substituted with methyl groups.

2. The method of claim 1 in which the food surface is an animal carcass at a temperature from 30 to 40°C.

3. The method of claim 2 in which s23/s26 is 0.27 or less.

4. The method of claim 3 in which the methylcellulose is applied in a liquid carrier at a concentration from 0.5 to 10 wt%.

5. The method of claim 4 in which the methylcellulose and the amino acid ester are present in a single liquid carrier.

6. The method of claim 5 in which the animal carcass is a beef or chicken carcass.

7. The method of claim 6 in which s23/s26 is from 0.14 to 0.26.

## Patentansprüche

1. Ein Verfahren zum Reduzieren oder Inhibieren einer bakteriellen Kontamination auf einer Nahrungsmitteloberfläche; wobei das Verfahren das Auftragen eines N-C₆-C₁₈-Acylaminosäureesters und einer Methylcellulose auf die Nahrungsmitteloberfläche beinhaltet, wobei
die Methylcellulose Anhydroglucoseeinheiten aufweist, die durch 1-4-Verknüpfungen verbunden sind, wobei Hydroxygruppen von Anhydroglucoseeinheiten mit Methylgruppen substituiert sind, sodass s23/s26 0,36 oder weniger beträgt,
wobei s23 der molare Anteil von Anhydroglucoseeinheiten ist, wobei nur die zwei Hydroxygruppen in den Positionen 2 und 3 der Anhydroglucoseeinheit mit Methylgruppen substituiert sind und
wobei s26 der molare Anteil von Anhydroglucoseeinheiten ist, wobei nur die zwei Hydroxygruppen an den Positionen 2 und 6 der Anhydroglucoseeinheit mit Methylgruppen substituiert sind.

2. Verfahren gemäß Anspruch 1, wobei die Nahrungsmitteloberfläche ein Tierkörper bei einer Temperatur von 30 bis 40 °C ist.

3. Verfahren gemäß Anspruch 2, wobei s23/s26 0,27 oder weniger beträgt.

4. Verfahren gemäß Anspruch 3, wobei die Methylcellulose in einem flüssigen Träger in einer Konzentration von 0,5 bis 10 Gew.-% aufgetragen wird.

5. Verfahren gemäß Anspruch 4, wobei die Methylcellulose und der Aminosäureester in einem einzigen flüssigen Träger vorliegen.

6. Verfahren gemäß Anspruch 5, wobei es sich bei dem Tierkörper um einen Körper eines Rinds oder eines Huhns handelt.

7. Verfahren gemäß Anspruch 6, wobei s23/s26 von 0,14 bis 0,26 beträgt.

## Revendications

1. Une méthode pour réduire ou inhiber une contamination bactérienne sur la surface d'un aliment ; ladite méthode comprenant l'application sur la surface de l'aliment d'un ester d'acide N-(acyle en C₆-C₁₈)aminé et d'une méthylcellulose, où
la méthylcellulose a des unités anhydroglucose unies par des liaisons 1-4 où des groupes hydroxy d'unités anhydroglucose sont substitués par des groupes méthyle de sorte que s23/s26 soit de 0,36 ou moins,
où s23 est la fraction molaire d'unités anhydroglucose où seuls les deux groupes hydroxy aux positions 2 et 3 de l'unité anhydroglucose sont substitués par des groupes méthyle et
où s26 est la fraction molaire d'unités anhydroglucose où seuls les deux groupes hydroxy aux positions 2 et 6 de l'unité anhydroglucose sont substitués par des groupes méthyle.

2. La méthode de la revendication 1 dans laquelle la surface de l'aliment est une carcasse d'animal à une température allant de 30 à 40 °C.

3. La méthode de la revendication 2 dans laquelle s23/s26 est de 0,27 ou moins.

4. La méthode de la revendication 3 dans laquelle la méthylcellulose est appliquée dans un véhicule liquide à une concentration allant de 0,5 à 10 % en poids.

5. La méthode de la revendication 4 dans laquelle la méthylcellulose et l'ester d'acide aminé sont présents dans un véhicule liquide unique.

6. La méthode de la revendication 5 dans laquelle la carcasse d'animal est une carcasse de boeuf ou de poulet.

7. La méthode de la revendication 6 dans laquelle s23/s26 va de 0,14 à 0,26.
